(19) Europäisches Patentamt
European Patent Office
Office européen des brevets

(11) Veröffentlichungsnummer: **0 491 287 B1**

(12) **EUROPÄISCHE PATENTSCHRIFT**

(45) Veröffentlichungstag der Patentschrift: **22.03.95**

(51) Int. Cl.6: **C08F 218/04**, C08F 214/18, C09D 131/02, C09D 127/12

(21) Anmeldenummer: **91121359.3**

(22) Anmeldetag: **12.12.91**

# (54) Vernetzbare, fluorhaltige Copolymere und Lacke auf Basis dieser Copolymeren.

(30) Priorität: **15.12.90 DE 4040130**

(43) Veröffentlichungstag der Anmeldung: **24.06.92 Patentblatt 92/26**

(45) Bekanntmachung des Hinweises auf die Patenterteilung: **22.03.95 Patentblatt 95/12**

(84) Benannte Vertragsstaaten: **AT BE CH DE DK ES FR GB IT LI LU NL SE**

(56) Entgegenhaltungen:
**DE-A- 3 347 655**
**DE-A- 3 415 975**
**DE-A- 3 700 548**

(73) Patentinhaber: **HOECHST AKTIENGESELLSCHAFT**

**D-65926 Frankfurt (DE)**

(72) Erfinder: **Schlipf, Michael, Dr.**
**Putzenlehnerstrasse 22**
**W-8269 Burgkirchen (DE)**
Erfinder: **Merten, Gerhard**
**Barbarossastrasse 27**
**W-6200 Wiesbaden (DE)**

**EP 0 491 287 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft vernetzbare, fluorhaltige Copolymere und Lackzusammensetzungen auf Basis dieser Copolymeren.

Fluorhaltige Copolymere, die unter Einwirkung von kalt- oder warmhärtenden Vernetzern festhaftende Lackierungen, insbesondere für industrielle Lackierungen, ergeben, sind allgemein bekannt.

Insbesondere ist aus der US-A- 4 584 343 ein Lacksystem bekannt, das auf Basis eines fluorhaltigen Copolymeren aufgebaut ist, welches neben einem Fluorolefin noch Einheiten eines Vinylesters einer verzweigten Carbonsäure, der der Verseifung widersteht, und Einheiten eines Vinylesters einer kurzkettigen Carbonsäure, der der Verseifung zugänglich ist, enthält. Unter dem Begriff "Verseifung" soll dabei im Rahmen dieser Beschreibung sowohl die Esterspaltung durch Hydrolyse als auch diejenige durch Alkoholyse verstanden werden. Durch Verseifung werden letztere in OH-Gruppen überführt und mit geeigneten Härtungsmitteln und üblichen Zusätzen zu einem industriell einsetzbaren Lacksystem formuliert, insbesondere für das Bandbeschichtungsverfahren. Solche Lacksysteme zeigen eine Reihe hervorragender Eigenschaften, wie Haftung, Oberflächenhärte, Glanz- und Witterungsbeständigkeit. Jedoch werden diese Systeme von gebräuchlichen Härtern zwar schnell angehärtet, aber sie behalten nach dem Auftrag noch für längere Zeit eine gewisse Restklebrigkeit, die wiederum zum Anhaften von Staubteilchen aus der Luft und damit zur Anschmutzung der Oberfläche Anlaß gibt. Es bestand daher die Aufgabe, nach Copolymeren Ausschau zu halten, die diesen Nachteil nicht aufweisen.

Zur Losung dieser Aufgabe stellt die vorliegende Erfindung ein vernetzbares, fluorhaltiges Copolymeres zur Verfügung, das besteht aus

a) 10 bis 60 Mol-% an copolymerisierten Einheiten eines Vinylesters der allgemeinen Formel

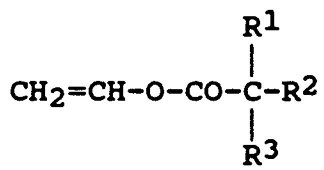 ,

worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,

b) 20 bis 50 Mol-% an copolymerisierten Einheiten eines Vinylesters der allgemeinen Formel

$CH_2 = CH\text{-}O\text{-}CO\text{-}R^4$ ,

worin $R^4$ ein geradkettiger Alkylrest mit 1 bis 3 C-Atomen ist und wobei 50 bis 100 % der copolymerisierten Einheiten dieses Vinylesters b) in der durch Verseifung erhaltenen OH-Form vorliegen, sowie

c) copolymerisierten Einheiten eines Perfluorolefins der Formel

$CF_2 = CFR_f$ ,

worin $R_f$ = F oder ein Perfluoralkylrest mit 1 bis 8 C-Atomen ist, in einer Menge, die die Summe der Komponenten a) + b) + c) auf 100 Mol-% ergänzt, jedoch mit der Maßgabe, daß mindestens 10 Mol-% des Perfluorolefins im Copolymeren vorhanden sind.

Vorzugsweise ist dies ein vernetzbares, fluorhaltiges Copolymeres, das besteht aus

a) 15 bis 60 Mol-% an copolymerisierten Einheiten eines Vinylesters der allgemeinen Formel

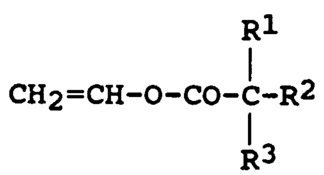 ,

worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,

b) 15 bis 45 Mol-% an copolymerisierten Einheiten eines Vinylesters der allgemeinen Formel

$CH_2 = CH\text{-}O\text{-}CO\text{-}R^4$ ,

worin $R^4$ ein geradkettiger Alkylrest mit 1 bis 3 C-Atomen ist und wobei 50 bis 100 % der copolymerisierten Einheiten dieses Vinylesters b) in der durch Verseifung erhaltenen OH-Form vorliegen, sowie

c) copolymerisierten Einheiten eines Perfluorolefins der Formel

$CF_2 = CFR_f$ ,

worin $R_f$ = F oder ein Perfluoralkylrest mit 1 bis 8 C-Atomen ist, in einer Menge, die die Summe der Komponenten a) + b) + c) auf 100 Mol-% ergänzt, jedoch mit der Maßgabe, daß mindestens 20 Mol-% des Perfluorolefins im Copolymeren vorhanden sind.

Der im erfindungsgemäßen Copolymeren enthaltene Vinylester der Komponente a) besitzt einen Acylrest der allgemeinen Formel

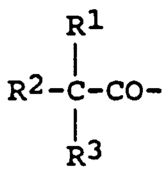 ,

der insgesamt 9 C-Atome aufweist und als besonderes Kennzeichen ein weiteres quartäres C-Atom neben dem zur CO-Gruppe alpha-ständigen quartären C-Atom der vorstehenden Formel. Dabei können diese Isomeren mit zwei quartären C-Atomen für sich allein - insbesondere als Gemisch - vorliegen oder aber 0 bis 80 Mol-% solcher Isomerer enthalten, die neben dem alpha-ständig zur CO-Gruppe angeordneten quartären C-Atom noch mindestens ein tertiäres C-Atom aufweisen.

Vorzugsweise ist der Acylrest dieser Vinylester ein Isomerengemisch, in dem neben den Isomeren mit zwei quartären C-Atomen auch noch 0,5 bis 80 Mol-% Isomere mit einem quartären und zwei tertiären C-Atomen im gleichen Molekül oder 0,5 bis 20 Mol-% Isomere mit einem quartären und einem tertiären C-Atom im gleichen Molekül enthalten sind. Es können auch alle drei genannten Spezies vorliegen, wobei die Anteile so auszuwählen sind, daß sie sich auf 100 ergänzen. Derartige stark verzweigte Vinylester widerstehen der Verseifung praktisch vollständig.

Die diesen Acylresten zugrundeliegenden hochgradig verzweigten Carbonsäuren lassen sich gewinnen durch Dimerisierung von Isobuten und anschließende Koch'sche Synthese dieser Dimeren mit Kohlenmonoxid und Wasser. Die entsprechenden Vinylester lassen sich gewinnen durch Transvinylierung mit Vinylacetat. Sie können aber auch nach der Reppe-Synthese durch Umsetzung der Carbonsäuren mit Acetylen erhalten werden.

Geeignete Vinylester für die Komponente b) des Copolymeren sind solche der Formel

$CH_2 = CH\text{-}O\text{-}CO\text{-}R^4$ ,

worin $R^4$ den Methyl-, Ethyl- oder Propylrest darstellt. Bevorzugt ist Vinylacetat.

Komponente c) des erfindungsgemäßen Copolymeren ist ein Perfluorolefin der Formel

$CF_2 = CFR_f$ ,

worin $R_f$ = F oder ein Perfluoralkylrest mit 1 bis 8 C-Atomen ist. Beispielsweise dafür seien genannt Perfluorbuten-1, Perfluorocten-1, Perfluorhexen-1 und Perfluorisobuten, vorzugsweise Hexafluorpropylen und insbesondere Tetrafluorethylen, das in den obengenannten Anteilen vorliegt, dessen Anteil aber 10 Mol-%, vorzugsweise 20 Mol-%, nicht unterschreiten soll.

Die Herstellung der erfindungsgemäßen Copolymeren erfolgt in der Weise, daß zunächst der verzweigtkettige Vinylester der Komponente a), der Vinylester der Komponente b) und das Perfluorolefin der

Komponente c) der Copolymerisation unterworfen werden und sodann die Komponente b) des Copolymeren durch alkalische Verseifung, insbesondere mit niederen Alkoholen, zu 50 bis 100 %, vorzugsweise zu 50 bis 80 %, in die OH-Form überführt wird.

Die Copolymerisation wird vorzugsweise in organischen Lösungsmitteln, die das gebildete Copolymere lösen, durchgeführt. Dafür geeignete Lösungsmittel sind insbesondere perfluorierte oder mit Fluor und Chlor perhalogenierte oder teilweise halogenierte Lösungsmittel, wie insbesondere 1,1,2-Trichlortrifluorethan, Perfluorcyclobutan oder 1,1,1-Trifluor-2-chlorethan. Ferner kommen in Betracht Alkanole, wie tert.-Butanol, Carbonsäureester, wie beispielsweise Butylacetat oder n-Propylacetat, oder aliphatische oder cycloaliphatische Ketone, wie beispielsweise Methylisobutylketon oder Cyclohexanon, sowie ferner Alkylaromaten, wie beispielsweise Toluol oder Xylol, oder auch Gemische aus den genannten Lösungsmitteln sowie ferner Gemische der genannten Lösungsmittel mit Ethanol.

Die Copolymerisation kann auch geführt werden zu kolloidalen Dispersionen nach dem Verfahren der Emulsionspolymerisation in wäßriger Phase. Dazu müssen der Flotte Emulgatoren in einer Menge von 0,01 bis 2 Gew.-%, bezogen auf das vorgelegte wäßrige Polymerisationsmedium, zugefügt werden. Im Prinzip sind alle dem Fachmann geläufigen nicht-ionischen und anionischen Emulgatoren, die für die Emulsionspolymerisation von Perfluorolefinen geeignet sind, einsetzbar. Solche Emulgatoren sind die Ammonium- und Alkalisalze von ω-Hydrofluorcarbonsäuren, von Perfluoralkoxypropionsäuren, insbesondere der Perfluorpropoxypropionsäure, von Perfluoralkylsulfonsäuren und Perfluoralkylphosphonsäuren sowie vorzugsweise von Perfluorcarbonsäuren mit längeren Perfluoralkylketten, insbesondere solchen mit 6 bis 12 C-Atomen im Perfluoralkylrest. Die vorgenannten Emulgatoren können auch in Form ihrer freien Säuren eingesetzt und gegebenenfalls mit Ammoniak neutralisiert werden, wobei durch das Verhältnis von Säure und Ammoniak gleichzeitig der pH-Wert eingestellt werden kann. Auch nicht-fluorierte Emulgatoren können gegebenenfalls eingesetzt werden.

Ferner können gegebenenfalls Puffersubstanzen bei der Copolymerisation Anwendung finden. Wenn eine vorzeitige Verseifung des Vinylesters der Komponente b) vermieden werden soll, ist es zweckmäßig, die Copolymerisation bei pH-Werten im sauren oder höchstens schwach alkalischen Bereich zu führen, also etwa bei pH-Werten von 3 bis 8.

Die Herstellung der erfindungsgemäßen Copolymeren kann auch nach dem Verfahren der Suspensionspolymerisation durchgeführt werden. Dazu stellt man den erforderlichen, schwach sauren oder schwach alkalischen pH-Bereich durch die Zugabe geeigneter Pfuffersubstanzen, die meist gleichzeitig auch als Fällungsmittel wirken, ein, wie beispielsweise Borax. Es kann zweckmäßig sein, auch bei der Suspensionspolymerisation eine kleinere Menge der obengenannten Emulgatoren hinzuzufügen, um Verklumpungen und Kesselbeläge zu vermeiden und eine gleichmäßigere Teilchengröße des Copolymerisats zu erreichen. Die Gewichtsmenge an solchen Emulgatoren liegt hier im allgemeinen unter 150 ppm, vorzugsweise unter 50 ppm, bezogen auf die wäßrige Flotte.

Die Copolymerisation der genannten Comonomeren wird in Gegenwart von radikalbildenden Initiatoren in Gang gesetzt. Für Bildung von Radikalen kommen in Frage entweder eine harte, energiereiche Strahlung oder in dem jeweils verwendeten Lösungsmittel oder Lösungsmittelgemisch lösliche, radikalbildende Initiatoren, wie sie in großer Zahl dem Fachmann für die Copolymerisation von Perfluorolefinen bekannt sind. Solche Initiatoren sind insbesondere peroxidische Verbindungen. Nur beispielsweise seien hier genannt Acylperoxide, wie zum Beispiel Diacetylperoxid, Dipropionylperoxid, Dibutyrylperoxid, Dibenzoylperoxid, Benzoylacetylperoxid, Dilauroylperoxid, Dibernsteinsäureperoxid oder Diglutarsäureperoxid; Peroxydicarbonate, wie zum Beispiel Di-2-ethylhexylperoxydicarbonat, Dicyclohexylperoxydicarbonat, Bis-(4-tert.-butylcyclohexyl)-peroxydicarbonat, Dimyristylperoxydicarbonat und Dicetylperoxydicarbonat; sowie ferner Cumylperneodecanoat, tert.-Butylperneodecanoat, tert.-Amylperpivalat, tert.-Butylperpivalat, tert.-Butylper-2-ethylhexanoat, tert.-Butylpermaleinat, tert.-Butylperisononanoat, 2,5-Dimethylhexan-2,5-diperbenzoat und tert.-Butylperbenzoat. Geeignet sind ferner Perfluoracylperoxide oder ω-Hydrofluoracylperoxide. Eine weitere Klasse von anwendbaren Initiatoren stellen wasserlösliche Azoverbindungen dar.

Weiterhin sind zu nennen für die Copolymerisation in wäßriger Phase wasserlösliche Persäuren, wie Peressigsäure sowie deren wasserlösliche Salze (insbesondere die Ammonium-, Natrium- oder Kaliumsalze) oder deren Ester, wie zum Beispiel tert.-Butylperoxyacetat und tert.-Butylperoxypivalat. Es können auch eingesetzt werden die wasserlöslichen Salze, insbesondere die Ammonium-, Kalium- und Natriumsalze, von anderen Persäuren, wie Peroxomono- und Peroxodisulfate, Perphosphate, Perborate oder Percarbonate. Vor allem im niederen Temperaturbereich können als Initiatoren auch die bekannten Redox-Systeme, gegebenenfalls mit Coaktivatoren, eingesetzt werden, die bei Temperaturen zwischen 10 und 50 °C bereits in ausreichendem Maße Radikale erzeugen. Von den dem Fachmann für die Polymerisation von Perfluorolefinen geläufigen Redox-Systemen seien hier nur beispielhaft genannt die Kombinationen von wasserlöslichen peroxidischen Verbindungen, vorzugsweise von Peroxodisulfaten mit Hydrogensulfit oder Disulfit oder deren

Anlagerungsprodukten mit Formaldehyd (Rongalit®), mit Thiosulfat sowie mit Diimin freisetzenden Verbindungen, wie zum Beispiel mit Hydrazin oder Azodicarbonsäureamid.

Dabei kann die gesamte Initiatormenge am Beginn der Reaktion der Polymerisationsflotte zugefügt werden. Es kann jedoch zweckmäßig sein, die Gesamtmenge des Initiators kontinuierlich im Verlauf der Polymerisation zuzuschleusen. Ebenso kann man auch einen Teil der Initiatormenge am Beginn vorgeben und den Rest einmalig oder in Teilmengen nachschleusen.

Von Vorteil ist auch die Zugabe von geeigneten Kettenübertragungsmitteln mit regelnder Wirkung bei der Copolymerisation sowohl bei der Copolymerisation im organischen Lösungsmittel als auch bei der nach dem Emulsions- oder dem Suspensionsverfahren im wäßrigen Medium. Als Kettenübertragungsmittel geeignet sind aliphatische Alkohole oder Etheralkohole mit kurzer Kette, aliphatische Carbonsäureester oder Ketone, Dialkylglykole, Mercaptane sowie ferner auch gesättigte aliphatische Halogenkohlenwasserstoffe, welche als Halogene Fluor, Chlor und/oder Brom und gegebenenfalls noch Wasserstoff enthalten. Als Beispiele solcher Halogenkohlenwasserstoffe seien genannt Tetrachlorethan, Trichlorethan, Tetrafluordibromethan sowie insbesondere Chloroform, Methylenchlorid und Tetrachlorkohlenstoff. Das Kettenübertragungsmittel wird üblicherweise bei Beginn der Polymerisation zugegeben, es kann jedoch auch eine Teilmenge abgetrennt und im späteren Verlauf des Prozesses zudosiert werden.

Die Copolymerisation wird bei Temperaturen von 0 bis 100 °C, vorzugsweise von 35 bis 85 °C, durchgeführt, wobei sich diese Temperatur im einzelnen insbesondere nach der Art des eingesetzten Initiators richtet. Das Perfluorolefin wird bei der Copolymerisation unter Druck aufgegeben und dieser Druck dann aufrechterhalten. Er kann im Bereich von Werten leicht über Normaldruck bis etwa 40 bar liegen, vorzugsweise wird ein Druck von 5 bis 25 bar eingehalten. Zur Beendigung der Polymerisation wird die Perfluorolefin-Zufuhr unterbrochen und das Ende der Reaktion abgewartet.

Bevorzugt werden bei Beginn der Copolymerisation etwa 5 bis 60 Gew.-% der theoretisch erforderlichen Menge an Vinylestern der Komponente a) und der Komponente b) im Polymerisationsgefäß vorgelegt, der Rest wird dann im Verlauf der Copolymerisation mit dem Perfluorolefin zudosiert. Es ist jedoch auch möglich, nur eine Teilmenge des Vinylesters der Komponente a) vorzulegen und den Rest seiner theoretisch erforderlichen Menge zusammen mit der Gesamtmenge an Vinylester der Komponente b) und an Perfluorolefin nachzuführen. Schließlich kann auch die Polymerisation mit der gleichzeitigen Zufuhr aller Komponenten (wobei eine oder mehrere auch vorgemischt sein können) beginnen und diese Zufuhr während des Prozesses fortlaufend weitergeführt wird.

Je nach Art des gewählten Verfahrens bei der Copolymerisation fällt das Copolymere in Form einer klaren, niedrigviskosen Lösung, eines körnigen Pulvers oder einer wäßrigen, kolloidalen Dispersion an. Letztere wird zunächst durch Zugabe geeigneter Koagulationsmittel oder durch das Einbringen hoher Scherkräfte gefällt.

Das so gewonnene erfindungsgemäße Copolymere wird anschließend einer Nachbehandlung zwecks Verseifung der Einheiten des Vinylesters der Komponente b) unterworfen. Dazu kann das pulverförmige Copolymere zunächst in einem Alkanol mit 1 bis 4 C-Atomen gelöst und dann mit Wasser gefällt werden. Auch kann die Verseifung mit wäßrigen Alkalien oder quaternären Ammoniumhydroxiden bewirkt werden.

Für die Aufarbeitung von in Lösung befindlichen Copolymeren wird zweckmäßigerweise ein Verfahren angewendet, bei dem

a) zunächst der Hauptteil des Lösungsmittels unter Normaldruck destillativ entfernt wird,

b) sodann die Restmonomeren durch Vakuumdestillation unter Zwangsförderung des hochviskosen Copolymeren entfernt werden,

c) dieses hochviskose Copolymere gelöst wird in einem Gemisch aus einem Alkanol mit 1 bis 4 C-Atomen und einem Lösungsmittel, wobei dieses Gemisch imstande sein soll, auch das verseifte Produkt homogen zu lösen, und

d) die Verseifung unter Zugabe eines alkalischen Agens durchgeführt, gegebenenfalls das Lösungsmittel aus c) destillativ abgetrennt und das verbleibende hochviskose Copolymere in einem Lacklösungsmittel gelöst wird, und

e) die entstandene Copolymerlösung einer Filtration unterworfen wird.

Mit den genannten Verfahren ist es möglich, die Einheiten des Vinylesters der Komponente b) in einem Anteil von 50 bis 100 %, vorzugsweise von 50 bis 80 %, in OH-Gruppen zu überführen.

Die auf diese Weise erhaltenen erfindungsgemäßen Copolymeren sind in einer Vielzahl von organischen Lösungsmitteln gut löslich, vor allem in Lösungsmitteln und Lösungsmittelgemischen, wie sie in der Lackindustrie üblicherweise verwendet werden.

Solche Lösungsmittel werden vor allem aus den folgenden Gruppen ausgewählt: aliphatische Alkohole mit 1 bis 8 C-Atomen, insbesondere mit 4 bis 8 C-Atomen; Polyglykole, wie Ethylendiglykol, Ethylentriglykol, Propylendiglykol, Propylentriglykol; Mono- und Diether solcher Glykole, wie beispielsweise Ethylenglykolmonoethylether, Ethylenglykoldiethylether, Ethylenglykolmonobutylether, Ethylenglykoldibutylether, Propylenglykolmonomethylether; Glykolester oder Glykoletherester, wie beispielsweise Ethylenglykolacetat oder Ethylenglykolacetatethylether, Propylenglykolacetatethylether und -methylether; ferner alkylierte und dialkylierte Aromaten, wie beispielsweise Xylol und Diethylbenzol sowie Isomerengemische alkylierter Aromaten, wie sie unter den Handelsbezeichnungen ®Solvesso oder ®Shellsol vertrieben werden; Ketone, wie zum Beispiel Methylisobutylketon, Cyclohexanon und Isophoron; Carbonsäureester, insbesondere Ester der Essigsäure und Propionsäure mit Alkoholen von 1 bis 6 C-Atomen; schließlich alle Gemische solcher Lösungsmittel, soweit sie homogen miteinander mischbar sind. Das Mischungsverhältnis von gelösten Copolymeren zu Lösungsmittel kann 95 : 5 = 5 : 95, vorzugsweise 90 : 10 = 10 : 90, betragen, es sind also auch Lacksysteme mit hohen Bindeharzanteilen ("high solids") herstellbar.

Die erfindungsgemäßen Copolymeren enthalten OH-Gruppen, die eine chemische Härtung des Lacks nach der Applikation ermöglichen. Je nach Auswahl des Vernetzungsmechanismus kann die Härtung bei Temperaturen zwischen 10 und 300 °C, vorzugsweise zwischen 15 und 250 °C, erfolgen.

Wenn die erfindungsgemäßen Copolymeren zur Herstellung eines wärmehärtbaren Lacks verwendet werden, so können verschiedene Härter, so zum Beispiel Aminoplaste, wie Melaminharze und Harnstoffharze, oder auch mehrbasische Säuren und Anhydride sowie blockierte Polyisocyanate, zugemischt werden, wobei diese Mischungen Einkomponenten-Beschichtungssysteme darstellen.

Daraus entstehen Überzüge, die hervorragend verlaufen und besonders elastische, haftfeste, korrosions- und witterungsstabile, insbesondere wasserfeste Grundierungen, Decklacke und Einschichtlackierungen ergeben. Für das Härten solcher als Einkomponenten-Beschichtungssysteme vorliegenden, modifizierten Lacke sind Einbrenntemperaturen von mindestens 80 °C erforderlich. Man kann die Vernetzungsreaktion durch Zusatz eines sauren Katalysators, wie beispielsweise p-Toluolsulfonsäure oder deren Salze, beschleunigen.

Typische Beispiele für Aminoplaste sind Kondensationsprodukte von Aminogruppen tragenden Verbindungen, wie beispielsweise Melamin, Harnstoff, Acetoguanamin oder Benzoguanamin, und Aldehyden, wie beispielsweise Formaldehyd, Paraformaldehyd, Acetaldehyd oder Glyoxal, sowie Produkte, die durch Veretherung dieser Kondensationsprodukte mit Alkoholen erhalten werden. Hierzu werden vorzugsweise $C_1$ bis $C_4$-Alkohole verwendet. Als Beispiele hierzu seien genannt: hexamethylverethertes Methylolmelamin, hexabutylverethertes Methylolmelamin, methylbutylverethertes Methylolmelamin, methylverethertes Methylolmelamin, butylverethertes Methylolmelamin und isobutylverethertes Methylolmelamin. Vom Gesichtspunkt der Kompatibilität mit dem erfindungsgemäßen Copolymeren sind vorzugsweise methylveretherte Methylolmelamine und hier im besonderen penta-bis-hexamethylveretherte Methylolmelamine zu verwenden.

Typische Beispiele für mehrbasische Säuren sind Acrylharze mit mindestens zwei Carboxylgruppen je Molekül, Polyesterharze mit mindestens zwei Carboxylgruppen je Molekül und aromatische polybasische Säuren, wie zum Beispiel Trimellitsäure und Pyromellitsäure.

Typische Beispiele für polybasische Säureanhydride sind Bernsteinsäureanhydrid, Trimellitsäureanhydrid, Pyromellitsäureanhydrid und Vinylpolymere mit Carbonsäureanhydrid-Gruppen.

Typische Beispiele für blockierte Polyisocyanate werden erhalten, wenn man die aus der Polyurethanchemie bekannten Polyisocyanate mit konventionellen Blockierungsmitteln, wie zum Beispiel Alkoholen, Verbindungen mit phenolischen OH-Gruppen, Oximen, Lactamen, Acetessigsäureethylestern und N-monosubstituierten Carbonsäureamiden, schützt.

Wenn andererseits das Copolymere zur Herstellung eines Lackes verwendet wird, bei dem die Härtung schon bei Raumtemperatur erfolgen soll, so wird als Vernetzer ein nicht-blockiertes Polyisocyanat verwendet. Bei dieser Applikation wird das Härtungsmittel vor Gebrauch gesondert zugemischt und man arbeitet mit einem Zweikomponenten-Beschichtungssystem.

Typische Beispiele für Polyisocyanate sind aliphatische Diisocyanate, wie Hexamethylendiisocyanat, Trimethylhexamethylendiisocyanat und Tetramethylendiisocyanat; alicyclische Diisocyanate, wie Xyloldiisocyanat, Methylcyclohexan-2,4- oder -2,6-diisocyanat, Isophorondiisocyanat und 4,4'-Methylen- bis-cyclohexylisocyanat; Polyisocyanate mit einer Biuret-Verzweigung, die erhalten werden durch Umsetzung der genannten Polyisocyanate mit Wasser; und Polyisocyanate mit einem Isocyanuratring, die erhalten werden durch Polymerisation der genannte Diisocyanate.

Die Isocyanat-Additionsreaktion wird von zahlreichen Katalysatoren beschleunigt, wobei solche mit Elektronen-Donator-(Lewis-Basen) oder -Acceptoreigenschaften (Lewis-Säuren) am wichtigsten sind. Tertiäre Amine, wie zum Beispiel Triethylamin, Diethylethanolamin, Dimethylethanolamin, 1,4-Diaza-bicyclo-(2,2,2)-octan und Cyclohexyldimethylamin, sind als Lewis-Basen wirksame Katalysatoren. Auch das als Acylierungskatalysator bekannte 4-Dimethylaminopyridin katalysiert die Isocyanatreaktion.

Unter den katalytisch wirksamen Lewis-Säuren sind die Zinn-Verbindungen am wichtigsten. So werden Zinn-(IV)-Verbindungen, wie beispielsweise Dibutylzinndilaurat und -diacetat, oder Zinn-(II)-Verbindungen,

wie Zinndioctanoat, als sehr wirksame Katalysatoren eingesetzt.

Schließlich ist auch die Vernetzung mit Epoxidharzen möglich, die ebenfalls in der Wärme und mit Katalysatoren, insbesondere mit Lithiumsalzen und quaternären Ammoniumsalzen, durchgeführt wird.

Für die Formulierung von Lacksystemen können alle in der Lackindustrie gängigen Pigmente und Extender eingesetzt werden, insbesondere Titandioxid, Eisenoxide, aber auch Cadmiumsulfid, Zinksulfid, Bleiweiß, Bariumsulfat, pyrogene Kieselsäure, Bentone und Kreide sowie auch Phthalocyaninfarbstoffe. Die Pigmentierungshöhe Bindemittel (das heißt erfindungsgemäßes Copolymeres) : Pigment liegt im Bereich eines Gewichtsverhältnisses von 1 : 0,2 bis 1 : 3,0.

Ferner können für solche Lackrezepturen übliche Additive, wie beispielsweise Verlaufmittel, Dispergiermittel, Netzmittel, UV-Absorber oder Hilfsmittel, zur Verbesserung von Glanz oder Haftung enthalten sein. Gegebenenfalls können aber auch Mattierungsmittel hinzugefügt werden.

Bei dem Verfahren der Vermischung des Copolymeren mit dem Lösungsmittel, dem Pigment und anderen Additiven kann man verschiedenste herkömmliche Geräte für die Lackherstellung einsetzen, zum Beispiel Kugelmühlen, Lackschüttelgeräte, Sandmühlen, Strahlmühlen, Drei-Walzenmühlen, Kneter und Dissolver.

Die unter Zusatz der genannten Vernetzungsmittel formulierten Lacksysteme ergeben Überzüge, die auf die verschiedensten Substrate aufgebracht und, je nach Vernetzungskomponente, bei Raumtemperatur gehärtet oder bei höheren Temperaturen eingebrannt werden können. Substrate dafür sind insbesondere Metalle, wie beispielsweise Eisen, Stahl, Aluminium, Kupfer, Bronze und Messing, aber auch andere harte Oberflächen, wie Glas, Keramik, Beton oder auch Holz oder Kunststoffoberflächen. Gegebenenfalls soll der Untergrund mit mechanischen Mitteln vorbehandelt werden. Bei schlecht haftendem Substratmaterial kann die vorherige Beschichtung mit einem Primer zweckmäßig sein.

Das Aufbringen kann mit allen üblichen Methoden bewerkstelligt werden, wie Spritzen, Rakeln, Bürsten, Rollen, Tauchen, Fluten, Walzen oder Streichen. Besonders geeignet sind die auf Basis der erfindungsgemäßen Copolymeren formulierten Lacksysteme für kalthärtende Beschichtungen von Objekten, die der Witterung ausgesetzt sind. Daneben sind diese Lacksysteme auch für industrielle Einbrennlackierungen, vor allem nach dem sogenannten Bandbeschichtungsverfahren ("coil coating"), geeignet.

Die auf Basis der erfindungsgemäßen Copolymeren formulierten Lacksysteme besitzen den überraschenden Vorteil einer stark verkürzten Staubtrocknungs- und Klebfreitrocknungszeit, das heißt, auch die Restklebrigkeit des Überzugs verschwindet völlig in einem sehr kurzen Zeitraum, so daß dann Staub- und Schmutzpartikel aus der Atmosphäre nicht mehr anhaften. Dies ist nicht nur aus ästethischen Gründen, sondern auch aus Gründen der Witterungsbeständigkeit sehr erwünscht, da in die Oberfläche eingelagerte Fremdkörper immer einen Angriffspunkt für schädliche Witterungseinflüsse darstellen.

Darüberhinaus weisen die erfindungsgemäß formulierten Lacksysteme die Eigenschaften bekannter Lacksysteme auf Basis von Fluorcopolymeren zumindest in gleichem Maße auch auf, wie beispielsweise hohen Glanz, Antiadhäsivität und hohes Pigmentaufnahmevermögen, was wiederum hohe Deckkraft, selbst in dünnen Auftragsschichten, erbringt.

Die Erfindung wird durch folgende Beispiele erläutert:

## Beispiel 1

In einem 40-l-Polymerisationskessel werden 20 l 1,1,2-Trichlor-1,2,2-trifluorethan vorgelegt. Die Temperatur des vorgelegten Mediums wird auf 20 °C gebracht und der Behälter sodann in üblicher Weise durch wiederholtes Spülen mit Stickstoff von Sauerstoff befreit. Durch zweimaliges Aufpressen von Tetrafluorethylen (TFE) auf 1,6 bar Überdruck wird die Flotte mit TFE gesättigt. Nach dem Aufheizen des Mediums auf 75 °C wird unter Rühren TFE bis zu einem Druck von 9 bar aufgepreßt. Nach Zugabe von 560 g Vinylacetat und 1180 g eines Vinylesters einer stark verzweigten Carbonsäure mit einem Acylrest von 9 C-Atomen (wobei im Acylrest ein Isomerengemisch vorliegt, enthaltend 28 Mol-% C-Ketten mit zwei quartären C-Atomen; 68 Mol-% C-Ketten mit einem quartären und zwei tertiären C-Atomen; 4 Mol-% C-Ketten mit einem quartären und einem tertiären C-Atom) wird durch weiteres Aufpressen von TFE der Polymerisationsdruck von 10 bar eingestellt. Die Polymerisation wird gestartet durch Zugabe von 8 g Bis-(4-tert.-butylcyclohexyl)-peroxydicarbonat, das zuvor in 1,1,2-Trichlor-1,2,2-trifluorethan gelöst wird. Im Verlauf der Polymerisation wird weiter Bis-(4-tert.-butylcyclohexyl)-peroxydicarbonat zugegeben, und zwar gerade so viel, daß die Polymerisationsgeschwindigkeit konstant bleibt. Durch Nachdosieren von TFE wird der Druck im Kessel auf 10 bar gehalten und weitere Monomere, Vinylacetat und der stark verzweigte Vinylester, entsprechend dem TFE-Verbrauch zugegeben. Die Nachdosierung erfolgt kontinuierlich und ist nach 2 Stunden beendet. Insgesamt werden 1500 g TFE, 2360 g des obengenannten stark verzweigten Vinylesters und 1120 g Vinylacetat zugesetzt. Der Gesamtverbrauch an Starter beträgt 36 g.

Eine Dreiviertelstunde nach dem Ende der Monomer- und Initiatorzugabe, nachdem der Druck im Polymerisationskessel auf 9,1 bar gefallen ist, ist die Polymerisation beendet. Man erhält eine klare Copolymerlösung mit einem Feststoffgehalt von 17 %. Der Restmonomergehalt beträgt 1,9 % an stark verzweigtem Vinylester und 1,0 % an Vinylacetat. Zur Abtrennung von Polymerisationsflotte und Restmonomeren wird die Produktlösung einer Destillation unterworfen. Das so gewonnene Polymere ist farblos bis schwach gelblich gefärbt. Es enthält 37 Mol-% an TFE-Einheiten, 31 Mol-% an copolymerisierten Einheiten des obengenannten stark verzweigten Vinylesters und 32 Mol-% an copolymerisierten Einheiten von Vinylacetat. Zur Verseifung wird das Copolymere in einem Gemisch aus 1,1,2-Trichlor-1,2,2-trifluorethan und Methanol gelöst, wobei für 1 kg des Copolymeren 1600 ml des Fluorchlorkohlenwasserstoffs und 550 ml Methanol erforderlich sind. Nach Zugabe von 10 Mol-% NaOH, bezogen auf den Vinylacetatanteil des Copolymeren, erfolgt die Verseifung bei Raumtemperatur während 5 Stunden unter dauerndem Rühren. Die Kontrolle des Verseifungsgrades erfolgt mittels IR-Spektroskopie durch Messung der OH-Bande bei 3500 $cm^{-1}$. Nach der Umsetzung wird die Reaktionslösung durch Zugabe von Essigsäure auf einen pH-Wert von 6 bis 7 eingestellt. Das zur Verseifung benötigte Lösungsmittelgemisch wird mittels eines Dünnschichtverdampfers abgetrennt und das Produkt im entsprechenden Lacklösemittel gelöst. Durch eine abschließende Druckfiltration werden als Verunreinigung enthaltende Salze, wie zum Beispiel Natriumacetat, abgetrennt und man erhält ein klares, farblos bis leicht gelb gefärbtes Produkt. Es besitzt eine OH-Zahl von 115 (Verseifungsgrad 70 %). Seine inhärente Viskosität $\eta$, gemessen bei 25 °C in Tetrahydrofuran, beträgt 0,22 dl/g. Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 54 300.

Das Produkt ist gut löslich in Butylacetat, Xylol, im Gemisch Xylol/Methylisobutylketon 2 : 1, in Propylenglykolmonomethylether und Propylenglykolacetatmonomethylether. Die Viskositätsbestimmung der 50gew.%igen Lösungen erfolgte, wie bei Lacken üblich, mit einem Auslaufbecher 4 mm nach DIN 53 211 und ergab in Abhängigkeit vom Lösungsmittel und der Temperatur Werte zwischen 13 und 70 Sekunden.

Beispiele 2 bis 8

Die Copolymerisation wird gemäß den Reaktionsbedingungen von Beispiel 1 durchgeführt, die eingesetzten Monomermengen sind in Tabelle 1 angegeben. In Tabelle 1 sind auch die Zusammensetzung der erhaltenen Copolymeren und die wichtigsten Harzeigenschaften (nach der Verseifung gemäß Beispiel 1) zusammengestellt:

TABELLE 1

| | Beispiel-Nr. 2 | 3 | 4 | 5 | 6 | 7 | 8 |
|---|---|---|---|---|---|---|---|
| Monomereinsatz (g) | | | | | | | |
| TFE | 2750 | 1500 | 1500 | 1500 | 1750 | 1750 | 1750 |
| stark verzweigter Vinylester (wie in Beispiel 1 definiert) | 4310 | 2360 | 2360 | 2360 | 2000 | 2200 | 2000 |
| Vinylacetat | 2050 | 660 | 800 | 950 | 1100 | 1000 | -- |
| Vinyl-n-propionat | -- | -- | -- | -- | -- | -- | 1280 |
| Copolymerzusammensetzung (Mol-%) | | | | | | | |
| TFE | 37 | 43 | 42 | 40 | 42 | 43 | 42 |
| stark verzweigter Vinylester | 31 | 36 | 33 | 31 | 26 | 29 | 27 |
| Vinylacetat | 32 | 21 | 25 | 29 | 32 | 28 | -- |
| Vinyl-n-propionat | -- | -- | -- | -- | -- | -- | 31 |
| OH-Zahl | 116 | 70 | 87 | 105 | 132 | 103 | 130 |
| Verseifungsgrad (%) | 70 | 69 | 72 | 73 | 79 | 71 | 80 |
| Inhärente Viskosität $\eta$ (dl/g) | 0,22 | 0,26 | 0,23 | 0,22 | 0,20 | 0,20 | 0,21 |
| $\bar{M}_{rel}$ | 54 000 | 61 000 | 58 000 | 56 000 | 50 000 | 52 000 | 52 000 |

Beispiel 9

Die Polymerisation und Aufarbeitung wird durchgeführt wie in Beispiel 1, jedoch wird als Initiator Dilauroylperoxid verwendet und eine Reaktionstemperatur von 80 °C gewählt. Bei Einsatz von 80 g

Lauroylperoxid ist die Reaktion nach 3 Stunden und 30 Minuten beendet. Das Produkt besitzt nach der Verseifung, die gemäß Beispiel 1 durchgeführt wird, eine OH-Zahl von 119 (Verseifungsgrad 72 %). Seine inhärente Viskosität $\eta$, gemessen bei 25 °C in Tetrahydrofuran, beträgt 0,13 dl/g. Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 39 000.

Beispiel 10

Die Polymerisation und Aufarbeitung wird durchgeführt wie in Beispiel 1, jedoch wird als Initiator Azabis-(isobutyronitril) verwendet und eine Reaktionstemperatur von 90 °C gewählt. Bei Einsatz von 85 g Azabis-(isobutyrolnitril) ist die Reaktion nach 4 Stunden und 50 Minuten beendet. Das Produkt besitzt nach der Verseifung, die gemäß Beispiel 1 durchgeführt wird, eine OH-Zahl von 110 (Verseifungsgrad 67 %). Seine inhärente Viskosität $\eta$, gemessen bei 25 °C in Tetrahydrofuran, beträgt 0,10 dl/g. Die Molekulargewicht des Endproduktes beträgt $\overline{M}_{rel}$ = 22 026.

Beispiel 11

In einem 40-l-Polymerisationskessel werden 16 l 1,1,2-Trichlor-1,2,2-trifluorethan und 4 l Xylol vorgelegt.

Die Temperatur des vorgelegten Mediums wird auf 20 °C gebracht und der Behälter sodann in üblicher Weise durch wiederholtes Spülen mit Stickstoff von Sauerstoff befreit. Durch zweimaliges Aufpressen von TFE auf 1,6 bar Überdruck wird die Flotte mit TFE gesättigt. Nach dem Aufheizen des Mediums auf 75 °C wird unter Rühren TFE bis zu einem Druck von 9 bar aufgepreßt. Nach Zugabe von 400 g Vinylacetat und 1180 g des stark verzweigten Vinylesters von Beispiel 1 wird durch weiteres Aufpressen von TFE der Polymerisationsdruck von 10 bar eingestellt. Die Polymerisation wird gestartet durch Zugabe von 8 g Bis-(4-tert.-butylcyclohexyl)-peroxydicarbonat, das zuvor in 1,1,2-Trichlor-1,2,2-trifluorethan gelöst wird. Im Verlauf der Polymerisation wird weiter Bis-(4-tert.-butylcyclohexyl)-peroxydicarbonat zugegeben, und zwar gerade so viel, daß die Polymerisationsgeschwindigkeit konstant bleibt. Durch Nachdosieren von TFE wird der Druck im Kessel auf 10 bar gehalten und weitere Monomere, Vinylacetat und der stark verzweigten Vinylester, entsprechend dem TFE-Verbrauch zugegeben. Die Nachdosierung erfolgt kontinuierlich und ist nach 3 Stunden beendet. Insgesamt werden 1500 g TFE, 2360 g des stark verzweigten Vinylesters von Beispiel 1 und 800 g Vinylacetat zugesetzt. Der Gesamtverbrauch an Starter beträgt 72 g.

Eine Dreiviertelstunde nach dem Ende der Monomer- und Initiatorzugabe, nachdem der Druck im Polymerisationskessel auf 9,0 bar gefallen ist, ist die Polymerisation beendet. Man erhält eine klare Copolymerlösung mit einem Feststoffgehalt von 17 %. Der Restmonomergehalt beträgt 1,5 % an stark verzweigtem Vinylester und 0,8 % an Vinylacetat. Zur Abtrennung von Polymerisationsflotte und Restmonomeren wird die Produktlösung einer Destillation unterworfen. Das so gewonnene Polymere ist farblos bis schwach gelblich gefärbt. Es enthält 42 Mol-% an TFE-Einheiten, 33 Mol-% an copolymerisierten Einheiten des stark verzweigten Vinylesters von Beispiel 1 und 25 Mol-% an copolymerisierten Einheiten von Vinylacetat. Es besitzt nach der Verseifung, die gemäß Beispiel 1 durchgeführt wird, eine OH-Zahl von 87 (Verseifungsgrad 72 %). Seine inhärente Viskosität $\eta$, gemessen bei 25 °C in Tetrahydrofuran, beträgt 0,09 dl/g. Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 20 500.

Das Produkt ist gut löslich in Butylacetat, Xylol, im Gemisch Xylol/Methylisobutylketon 2 : 1, in Propylenglykolmonomethylether und Propylenglykolacetatmonomethylether. Die Viskositätsbestimmung der 50gew.%igen Lösungen erfolgte, wie bei Lacken üblich, mit einem Auslaufbecher 4 mm nach DIN 53 211 und ergab in Abhängigkeit vom Lösungsmittel und der Temperatur Werte zwischen 7 und 45 Sekunden.

Beispiel 12

In einem 40-l-Polymerisationskessel werden 20 l Xylol vorgelegt. Die Temperatur des vorgelegten Mediums wird auf 20 °C gebracht und der Behälter sodann in üblicher Weise durch wiederholtes Spülen mit Stickstoff von Sauerstoff befreit. Durch zweimaliges Aufpressen von TFE auf 1,6 bar Überdruck wird die Flotte mit TFE gesättigt. Nach dem Aufheizen des Mediums auf 75 °C wird unter Rühren TFE bis zu einem Druck von 9 bar aufgepreßt. Nach Zugabe von 560 g Vinylacetat und 1180 g des stark verzweigten Vinylesters von Beispiel 1 wird durch weiteres Aufpressen von TFE der Polymerisationsdruck von 10 bar eingestellt. Die Polymerisation wird gestartet durch Zugabe von 12 g Bis-(4-tert.-butylcyclohexyl)-peroxydicarbonat, das zuvor in Xylol gelöst wird. Im Verlauf der Polymerisation wird weiter Bis-(4-tert.-butylcyclohexyl)-peroxydicarbonat zugegeben, und zwar gerade so viel, daß die Polymerisationsgeschwindigkeit

konstant bleibt. Durch Nachdosieren von TFE wird der Druck im Kessel auf 10 bar gehalten und weitere Monomere, Vinylacetat und der stark verzweigte Vinylester, entsprechend dem TFE-Verbrauch zugegeben. Die Nachdosierung erfolgt kontinuierlich und ist nach 4 Stunden beendet. Insgesamt werden 1500 g TFE, 2360 g des stark verzweigten Vinylesters von Beispiel 1 und 1120 g Vinylacetat zugesetzt. Der Gesamtverbrauch an Starter beträgt 300 g.

Eine Dreiviertelstunde nach dem Ende der Monomer- und Initiatorzugabe, nachdem der Druck im Polymerisationskessel auf 9,2 bar gefallen ist, ist die Polymerisation beendet. Man erhält eine klare Copolymerlösung mit einem Feststoffgehalt von 17 %. Der Restmonomergehalt beträgt 2,6 % an stark verzweigtem Vinylester und 1,8 % an Vinylacetat. Zur Abtrennung von Polymerisationsflotte und Restmonomeren wird die Produktlösung einer Destillation unterworfen. Das so gewonnene Polymere ist farblos bis schwach gelblich gefärbt. Es enthält 37 Mol-% an TFE-Einheiten, 31 Mol-% an copolymerisierten Einheiten des stark verzweigten Vinylesters von Beispiel 1 und 32 Mol-% an copolymerisierten Einheiten von Vinylacetat. Es besitzt nach der Verseifung, die gemäß Beispiel 1 durchgeführt wird, eine OH-Zahl von 89 (Verseifungsgrad 54 %). Seine inhärente Viskosität $\eta$, gemessen bei 25 °C in Tetrahydrofuran, beträgt 0,027 dl/g. Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 3640.

Das Produkt ist gut löslich in Butylacetat, Xylol, im Gemisch Xylol/Methylisobutylketon 2 : 1, in Propylenglykolmonomethylether und Propylenglykolacetatmonomethylether. Die Viskositätsbestimmung der 50gew.%igen Lösungen erfolgte, wie bei Lacken üblich, mit einem Auslaufbecher 4 mm nach DIN 53 211 und ergab in Abhängigkeit vom Lösungsmittel und der Temperatur Werte zwischen 6 und 39 Sekunden.

Beispiel 13

In einem 40-l-Polymerisationskessel werden 17 l Xylol und 3 l Ethanol vorgelegt. Die Temperatur des vorgelegten Mediums wird auf 20 °C gebracht und der Behälter sodann in üblicher Weise durch wiederholtes Spülen mit Stickstoff von Sauerstoff befreit. Durch zweimaliges Aufpressen von TFE auf 1,6 bar Überdruck wird die Flotte mit TFE gesättigt. Nach dem Aufheizen des Mediums auf 75 °C wird unter Rühren TFE bis zu einem Druck von 9 bar aufgepreßt. Nach Zugabe von 560 g Vinylacetat und 1180 g des stark verzweigten Vinylesters von Beispiel 1 wird durch weiteres Aufpressen von TFE der Polymerisationsdruck von 10 bar eingestellt. Die Polymerisation wird gestartet durch Zugabe von 18 g Bis-(4-tert.-butylcyclohexyl)-peroxydicarbonat, das zuvor in Xylol gelöst wird. Im Verlauf der Polymerisation wird weiter Bis-(4-tert.-butylcyclohexyl)-peroxydicarbonat zugegeben, und zwar gerade so viel, daß die Polymerisationsgeschwindigkeit konstant bleibt. Durch Nachdosieren von TFE wird der Druck im Kessel auf 10 bar gehalten und weitere Monomere, Vinylacetat und der stark verzweigte Vinylester, entsprechend dem TFE-Verbrauch zugegeben. Die Nachdosierung erfolgt kontinuierlich und ist nach 4 Stunden beendet. Insgesamt werden 1500 g TFE, 2360 g des stark verzweigten Vinylesters von Beispiel 1 und 1120 g Vinylacetat zugesetzt. Der Gesamtverbrauch an Starter beträgt 300 g.

Eine Dreiviertelstunde nach dem Ende der Monomer- und Initiatorzugabe, nachdem der Druck im Polymerisationskessel auf 9,2 bar gefallen ist, ist die Polymerisation beendet. Man erhält eine klare Copolymerlösung mit einem Feststoffgehalt von 17 %. Der Restmonomergehalt beträgt 2,7 % an stark verzweigtem Vinylester und 1,9 % an Vinylacetat. Zur Abtrennung von Polymerisationsflotte und Restmonomeren wird die Produktlösung einer Destillation unterworfen. Das so gewonnene Polymere ist farblos bis schwach gelblich gefärbt. Es enthält 37 Mol-% an TFE-Einheiten, 31 Mol-% an copolymerisierten Einheiten des stark verzweigten Vinylesters von Beispiel 1 und 32 Mol-% an copolymerisierten Einheiten von Vinylacetat. Es besitzt nach der Verseifung, die gemäß Beispiel 1 durchgeführt wird, eine OH-Zahl von 105 (Verseifungsgrad 64 %). Seine inhärente Viskosität $\eta$, gemessen bei 25 °C in Tetrahydrofuran, beträgt 0,023 dl/g. Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 3360.

Das Produkt ist gut löslich in Butylacetat, Xylol, im Gemisch Xylol/Methylisobutylketon 2 : 1, in Propylenglykolmonomethylether und Propylenglykolacetatmonomethylether. Die Viskositätsbestimmung der 50gew.%igen Lösungen erfolgte, wie bei Lacken üblich, mit einem Auslaufbecher 4 mm nach DIN 53 211 und ergab in Abhängigkeit vom Lösungsmittel und der Temperatur Werte zwischen 6 und 39 Sekunden.

In den nachstehenden Beispielen wurden folgende Prüfmethoden und Tests verwendet:

Staubtrocknung entspricht Trockengrad 1 nach DIN-Norm 53 150 "Bestimmung des Trockengrads von Anstrichstoffen".

Klebfreitrocknung entspricht Trockengrad 2 nach DIN-Norm 53 150.

| | |
|---|---|
| Pendelhärte nach König: | DIN-Norm 53 157 |
| Erichsen-Tiefung: | ISO-Vorschrift 1520 |

| | |
|---|---|
| Impact: | ECCA (European Coil-Coater's Association) T 5, entspricht den Referenznormen ASTM D 2794 - 69 und ISO R 291 |
| Bleistifthärte: | ECCA T 4 |

Biegeprüfung (T-Bend):

Der Lack wird auf Aluminiumblech (Bonder Al 722) aufgetragen. Filmstärke naß 100 µm, entspricht 20 bis 22 µm trocken. Ein 1 cm breiter Streifen dieses Blechs wird mit außenliegendem Film geknickt und um 180° gebogen. Dieser Vorgang wird (mit zunehmendem Biegeradius) an gleichen Streifen solange wiederholt, bis der Film nicht mehr reißt (T 0 = reißt beim ersten Biegevorgang nicht, T 1 = reißt beim zweiten Biegevorgang nicht und so weiter).

Beispiel 14

Abmischung in der Perlmühle:

| | |
|---|---|
| - Copolymeres aus Beispiel 2 (50gew.%ige Lösung in Butylacetat) | 200,00 g |
| - Titandioxid | 122,00 g |
| | 322,00 g |

Lackansatz:

| | |
|---|---|
| - Perlmühlenansatz, wie oben | 322,00 g |
| - Hexamethylendiisocyanat-Trimer, 75gew.%ige Lösung (®Desmodur N 75) | 52,20 g |
| - Dibutylzinndilaurat (1 gew.%ige Lösung in Xylol) | 200,00 mg |

Die Aushärtung des Lackes erfolgt bei 20 °C.

Die Mischung wird mit einem Auftragsgerät auf eine Glasplatte aufgetragen. Die Beschichtung wird verschiedenen Tests unterworfen. Die Ergebnisse sind in Tabelle 2 aufgeführt.

Tabelle 2

| Test | | Ergebnis |
|---|---|---|
| Staubtrocknung | | 30 min |
| Klebfreitrocknung | | 60 min |
| Pendelhärte 7 d | | 158 s |
| Erichsen-Tiefung 14 d | | 11 mm |
| Sun Test*) | 0 h | 92 % |
| | 250 h | 88 % |
| | 500 h | 83 % |
| | 750 h | 80 % |
| | 1000 h | 79 % |

*) Bestimmung des Glanzes der Oberfläche bei 60° Spiegelreflexion nach DIN-Norm 67 530 (% reflektierte Lichtintensität, bezogen auf 100 % eingestrahlte Lichtintensität)

Beispiel 15

| | |
|---|---|
| - Copolymeres aus Beispiel 2 (50gew.%ige Lösung in Butylacetat) | 100,00 g |
| - pentamethylverethertes Methylolmelamin (®Maprenal MF 900) | 5,55 g |
| - p-Toluolsulfonsäure | 26,00 mg |

Filmaufzug:
Klarlacke, Rakelaufzug 100 µm naß, circa 20 bis 22 µm trocken.
PMT (Peak-metal-temperature): 224 bis 232 °C.
Die Mischung wird auf Aluminiumblech (Bonder Al 722) aufgetragen. Die erhaltene Beschichtung wird verschiedenen Tests unterworfen. Die Ergebnisse sind in Tabelle 3 aufgeführt.

Tabelle 3

| Test | Ergebnis |
|---|---|
| Acetontest*) | >100 |
| Impact | 40 ip |
| T-Bend | T 2 |
| Haftung nach T-Bend**) | 0 |
| Bleistifthärte | F |

*) Anzahl der Wischvorgänge (Doppelwischungen) bis zum Abreiben der Beschichtung unter Verwendung von mit Aceton getränkter Gaze.
**) Skala 0 bis 5; 0 = bester Wert, visuelle Begutachtung der Haftung am entstandenen T-Bend-Riß

Beispiel 16

| | |
|---|---|
| - Copolymeres aus Beispiel 2 (50gew.%ige Lösung in Butylacetat) | 100,00 g |
| - blockiertes aliphatisches Isocyanat, 25gew.%ige Lösung in Methoxypropylacetat (®Additol VXL 9946) | 121,70 g |

Filmaufzug:
Die Mischung wird als Klarlack auf Aluminiumblech (Bonder Al 722) aufgetragen.
Rakelaufzug 100 µm naß, circa 20 bis 22 µm trocken. PMT (Peak-metal-temperature): 224 bis 232 °C.
Die Beschichtung wird verschiedenen Tests unterworfen. Die Ergebnisse sind in Tabelle 4 aufgeführt.

Tabelle 4

| Test | Ergebnis |
|---|---|
| Acetontest | >100 |
| Impact | 40 ip |
| T-Bend | T 2 |
| Haftung nach T-Bend | 0 |
| Bleistifthärte | H |

Beispiel 17

| | |
|---|---|
| - Copolymeres aus Beispiel 7 (50gew.%ige Lösung in Xylol/Methylisobutylketon 1 : 2) | 100,00 g |
| - pentamethylverethertes Methylolmelamin (®Maprenal MF 900) | 5,55 g |
| - p-Toluolsulfonsäure | 62,50 mg |

Filmaufzug:
Klarlacke, Rakelaufzug 100 µm naß, 20 bis 22 µm trocken. Einbrennbedingungen: 190 °C, 15 Minuten.
Die Beschichtung wird verschiedenen Tests unterworfen. Die Ergebnisse sind in Tabelle 5 aufgeführt.

Tabelle 5

| Test | Ergebnis |
|---|---|
| Acetontest | >100 |
| Impact | 80 ip |
| T-Bend | T 3 |
| Haftung nach T-Bend | 0 |
| Bleistifthärte | F |

Beispiel 18

Einsatz von UV-Absorbern in Kombination mit kalthärtenden Fluorlackbindemitteln:

| | |
|---|---|
| - Copolymeres aus Beispiel 2 (50gew.%ige Lösung in Butylacetat) | 100,00 g |
| - Dibutylzinndilaurat (1gew.%ige Lösung in Xylol) | 100,00 mg |
| - sterisch gehindertes Piperidin-Derivat (®Tinuvin 292 von Firma Ciba Geigy) | 0,61 g |
| - 2-[Hydroxy-3,5-di-(1,1-dimethylbenzyl)phenyl]-2-H-benztriazol, 10gew.%ige Lösung in Xylol (UV-Absorber) | 6,10 g |
| - Hexamethylendiisocyanat-Trimer, 75gew.%ige Lösung (®Desmodur N 75) | 26,10 g |

Applikation:
Spritzen: 2 Kreuzgänge = circa 25 bis 30 µm trocken.
Die Aushärtung erfolgt bei Raumtemperatur. Die Beschichtung wird verschiedenen Tests unterworfen. Die Ergebnisse sind in Tabelle 6 aufgeführt.

Tabelle 6

| Test | Ergebnis |
|---|---|
| Staubtrocknung | 30 min |
| Klebfreitrocknung | 60 min |
| Pendelhärte 7 d | 143 s |
| Trübung*) | 1 |

*) Skala 0 bis 5; 0 = bester Wert.

**Patentansprüche**
**Patentansprüche für folgende Vertragsstaaten : AT, BE, CH, DE, DK, FR, GB, IT, LI, LU, NL, SE**

**1.** Vernetzbares, fluorhaltiges Copolymeres, das besteht aus

a) 10 bis 60 Mol-% an copolymerisierten Einheiten eines Vinylesters der allgemeinen Formel

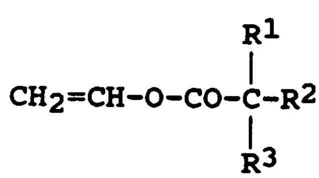 ,

worin $R^1$, $R^2$ und $R^3$ Alkylreste sind und wobei der gesamte Acylrest 9 C-Atome aufweist und aus

Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,
b) 20 bis 50 Mol-% an copolymerisierten Einheiten eines Vinylesters der allgemeinen Formel

$CH_2 = CH\text{-}O\text{-}CO\text{-}R^4$ ,

worin $R^4$ ein geradkettiger Alkylrest mit 1 bis 3 C-Atomen ist und wobei 50 bis 100 % der copolymerisierten Einheiten dieses Vinylesters b) in der durch Verseifung erhaltenen OH-Form vorliegen, sowie
c) copolymerisierten Einheiten eines Perfluorolefins der Formel

$CF_2 = CFR_f$ ,

worin $R_f$ = F oder ein Perfluoralkylrest mit 1 bis 8 C-Atomen ist, in einer Menge, die die Summe der Komponenten a) + b) + c) auf 100 Mol-% ergänzt, jedoch mit der Maßgabe, daß mindestens 10 Mol-% des Perfluorolefins im Copolymeren vorhanden sind.

**2.** Vernetzbares, fluorhaltiges Copolymeres gemäß Anspruch 1, das besteht aus
a) 15 bis 60 Mol-% an copolymerisierten Einheiten eines Vinylesters der allgemeinen Formel

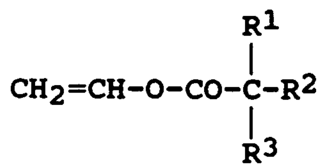 ,

worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,
b) 15 bis 45 Mol-% an copolymerisierten Einheiten eines Vinylesters der allgemeinen Formel

$CH_2 = CH\text{-}O\text{-}CO\text{-}R^4$ ,

worin $R^4$ ein geradkettiger Alkylrest mit 1 bis 3 C-Atomen ist und wobei 50 bis 100 % der copolymerisierten Einheiten dieses Vinylesters b) in der durch Verseifung erhaltenen OH-Form vorliegen, sowie
c) copolymerisierten Einheiten eines Perfluorolefins der Formel

$CF_2 = CFR_f$ ,

worin $R_f$ = F oder ein Perfluoralkylrest mit 1 bis 8 C-Atomen ist, in einer Menge, die die Summe der Komponenten a) + b) + c) auf 100 Mol-% ergänzt, jedoch mit der Maßgabe, daß mindestens 20 Mol-% des Perfluorolefins im Copolymeren vorhanden sind.

**3.** Vernetzbares, fluorhaltiges Copolymeres gemäß Anspruch 1 oder 2, dadurch gekennzeichnet, daß die Komponente a) besteht aus copolymerisierten Einheiten eines Vinylesters der allgemeinen Formel

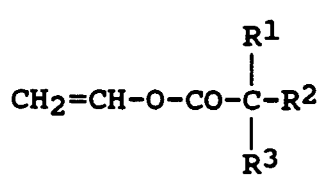 ,

worin $R^1$, $R^2$ und $R^3$ Alkylreste sind und wobei der gesamte Acylrest 9 C-Atome aufweist und aus Isomeren mit zwei quartären C-Atomen besteht, denen 0,5 bis 80 Mol-% Isomere, die ein quartäres C-Atom zusammen mit zwei tertiären C-Atomen im Acylrest aufweisen, beigemischt sind.

4. Vernetzbares, fluorhaltiges Copolymeres gemäß einem oder mehreren der Ansprüche 1 bis 3, dadurch gekennzeichnet, daß die Komponente a) besteht aus copolymerisierten Einheiten eines Vinylesters der allgemeinen Formel

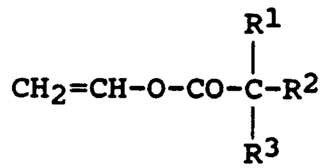 ,

worin $R^1$, $R^2$ und $R^3$ Alkylreste sind und wobei der gesamte Acylrest 9 C-Atome aufweist und aus Isomeren mit zwei quartären C-Atomen besteht, denen 0,5 bis 20 Mol-% Isomere, die ein quartäres C-Atom zusammen mit einem tertiären C-Atom im Acylrest aufweisen, beigemischt sind.

5. Vernetzbares, fluorhaltiges Copolymeres gemäß einem oder mehreren der Ansprüche 1 bis 4, dadurch gekennzeichnet, daß das Perfluorolefin der Komponente c) Tetrafluorethylen ist.

6. Lackzusammensetzungen für industrielle Anwendungen, enthaltend übliche Pigmente und Füllstoffe, Vernetzungskomponenten, Lösungsmittel und für Lacke übliche Hilfsstoffe, dadurch gekennzeichnet, daß sie 10 bis 50 Gew.-% eines Copolymeren gemäß Anspruch 1 enthalten.

**Patentansprüche für folgenden Vertragsstaat : ES**

1. Verfahren zur Herstellung von vernetzbaren, fluorhaltigen Copolymeren durch Copolymerisation eines Vinylesters einer verzweigten Carbonsäure, eines Vinylesters einer kurzkettigen Carbonsäure und eines Perfluorolefins als Comonomere in Gegenwart von üblichen Initiatoren in flüssiger Phase, dadurch gekennzeichnet, daß die genannten Comonomeren so ausgewählt und in der Menge so bemessen werden, daß ein Copolymeres gebildet wird, das besteht aus
   a) 10 bis 60 Mol-% an copolymerisierten Einheiten eines Vinylesters der allgemeinen Formel

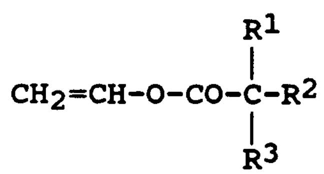 ,

   worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,
   b) 20 bis 50 Mol-% an copolymerisierten Einheiten eines Vinylesters der allgemeinen Formel

   $CH_2 = CH\text{-}O\text{-}CO\text{-}R^4$ ,

   worin $R^4$ ein geradkettiger Alkylrest mit 1 bis 3 C-Atomen ist, sowie
   c) copolymerisierten Einheiten eines Perfluorolefins der Formel

   $CF_2 = CFR_f$ ,

   worin $R_f$ = F oder ein Perfluoralkylrest mit 1 bis 8 C-Atomen ist, in einer Menge, die die Summe der Komponenten a) + b) + c) auf 100 Mol-% ergänzt, jedoch mit der Maßgabe, daß mindestens 10 Mol-% des Perfluorolefins im Copolymeren vorhanden sind,

und das gebildete Copolymere einer verseifenden Nachbehandlung unterworfen wird, wobei 50 bis 100 % der copolymerisierten Einheiten des Vinylesters b) in die OH-Form überführt werden.

**2.** Verfahren zur Herstellung von vernetzbaren, fluorhaltigen Copolymeren gemäß Anspruch 1, dadurch gekennzeichnet, daß ein Copolymeres gebildet wird, das besteht aus

a) 15 bis 60 Mol-% an copolymerisierten Einheiten eines Vinylesters der allgemeinen Formel

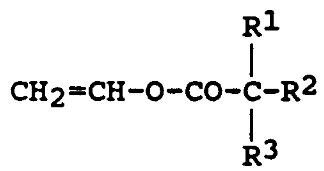 ,

worin $R^1$, $R^2$ und $R^3$ Alkylreste sind und wobei der gesamte Acylrest 9 C-Atome aufweist und aus Isomeren mit zwei quartären C-Atomen besteht, denen 0 bis 80 Mol-% Isomere, die ein quartäres C-Atom zusammen mit mindestens einem tertiären C-Atom im Acylrest aufweisen, beigemischt sind,

b) 15 bis 45 Mol-% an copolymerisierten Einheiten eines Vinylesters der allgemeinen Formel

$CH_2 = CH\text{-}O\text{-}CO\text{-}R^4$ ,

worin $R^4$ ein geradkettiger Alkylrest mit 1 bis 3 C-Atomen ist, sowie

c) copolymerisierten Einheiten eines Perfluorolefins der Formel

$CF_2 = CFR_f$ ,

worin $R_f$ = F oder ein Perfluoralkylrest mit 1 bis 8 C-Atomen ist, in einer Menge, die die Summe der Komponenten a) + b) + c) auf 100 Mol-% ergänzt, jedoch mit der Maßgabe, daß mindestens 20 Mol-% des Perfluorolefins im Copolymeren vorhanden sind.

und das gebildete Copolymere einer verseifenden Nachbehandlung unterworfen wird, wobei 50 bis 100 % der copolymerisierten Einheiten des Vinylesters b) in die OH-Form überführt werden.

**3.** Verfahren zur Herstellung von vernetzbaren, fluorhaltigen Copolymeren gemäß Anspruch 1 und 2, dadurch gekennzeichnet, daß ein Copolymeres gebildet wird, dessen Komponente a) besteht aus copolymerisierten Einheiten eines Vinylesters der allgemeinen Formel

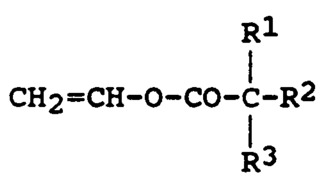 ,

worin $R^1$, $R^2$ und $R^3$ Alkylreste sind und wobei der gesamte Acylrest 9 C-Atome aufweist und aus Isomeren mit zwei quartären C-Atomen besteht, denen 0,5 bis 80 Mol-% Isomere, die ein quartäres C-Atom zusammen mit zwei tertiären C-Atomen im Acylrest aufweisen, beigemischt sind.

**4.** Verfahren zur Herstellung von vernetzbaren, fluorhaltigen Copolymeren gemäß einem oder mehreren der Ansprüche 1 bis 3, dadurch gekennzeichnet, daß die Komponente a) besteht aus copolymerisierten Einheiten eines Vinylesters der allgemeinen Formel

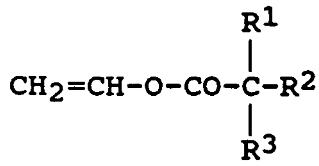 ,

worin $R^1$, $R^2$ und $R^3$ Alkylreste sind und wobei der gesamte Acylrest 9 C-Atome aufweist und aus Isomeren mit zwei quartären C-Atomen besteht, denen 0,5 bis 20 Mol-% Isomere, die ein quartäres C-Atom zusammen mit einem tertiären C-Atom im Acylrest aufweisen, beigemischt sind.

**5.** Verfahren zur Herstellung von vernetzbaren, fluorhaltigen Copolymeren gemäß einem oder mehreren der Ansprüche 1 bis 4, dadurch gekennzeichnet, daß ein Copolymeres gebildet wird, dessen Komponente c) Tetrafluorethylen ist.

**6.** Verfahren zur Herstellung von Überzügen durch Aufbringen einer Mischung auf Basis eines fluorhaltigen Copolymeren, von Vernetzungskomponenten, von Lacklösungsmittel und anderen für Lacke üblichen Hilfsstoffen, dadurch gekennzeichnet, daß das fluorhaltige Copolymere eines gemäß einem oder mehreren der Ansprüche 1 bis 5 ist und einen Anteil von 10 bis 50 Gew.-% ausmacht.

**Claims**
**Claims for the following Contracting States : AT, BE, CH, DE, DK, FR, GB, IT, LI, LU, NL, SE**

**1.** A crosslinkable, fluorine-containing copolymer which comprises
a) from 10 to 60 mol-% of copolymerised units of a vinyl ester of the formula

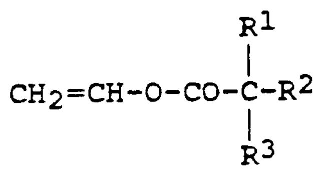

in which $R^1$, $R^2$ and $R^3$ are alkyl radicals and in which the entire acyl radical contains 9 carbon atoms and comprises isomers containing two quaternary carbon atoms to which from 0 to 80 mol-% of isomers containing one quaternary carbon atom together with at least one tertiary carbon atom in the acyl radical have been admixed,
b) from 20 to 50 mol-% of copolymerized units of a vinyl ester of the formula

$CH_2 = CH\text{-}O\text{-}CO\text{-}R^4$

in which $R^4$ is a straight-chain alkyl radical having 1 to 3 carbon atoms and in which from 50 to 100% of the copolymerized units of this vinyl ester b) are in the OH form obtained by hydrolysis, and
c) copolymerized units of a perfluoroolefin of the formula

$CF_2 = CFR_f$

in which $R_f$ is F or a perfluoroalkyl radical having 1 to 8 carbon atoms, in an amount which makes the sum of components a) + b) + c) up to 100 mol-%, but with the proviso that at least 10 mol-% of the perfluoroolefin are present in the copolymer.

**2.** A crosslinkable, fluorine-containing copolymer as claimed in claim 1, which comprises

a) from 15 to 60 mol-% of copolymerized units of a vinyl ester of the formula

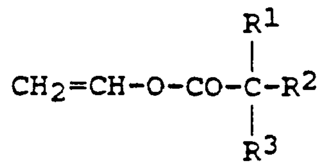

in which $R^1$, $R^2$ and $R^3$ are alkyl radicals and in which the entire acyl radical contains 9 carbon atoms and comprises isomers containing two quaternary carbon atoms to which from 0 to 80 mol-% of isomers containing one quaternary carbon atom together with at least one tertiary carbon atom in the acyl radical have been admixed,

b) from 15 to 45 mol-% of copolymerized units of a vinyl ester of the formula

$CH_2 = CH\text{-}O\text{-}CO\text{-}R^4$

in which $R^4$ is a straight-chain alkyl radical having 1 to 3 carbon atoms and in which from 50 to 100% of the copolymerized units of this vinyl ester b) are in the OH form obtained by hydrolysis, and

c) copolymerized units of a perfluoroolefin of the formula

$CF_2 = CFR_f$

in which $R_f$ is F or a perfluoroalkyl radical having 1 to 8 carbon atoms, in an amount which makes the sum of components a) + b) + c) up to 100 mol-%, but with the proviso that at least 20 mol-% of the perfluoroolefin are present in the copolymer.

**3.** A crosslinkable, fluorine-containing copolymer as claimed in claim 1 or 2, wherein component a) comprises copolymerized units of a vinyl ester of the formula

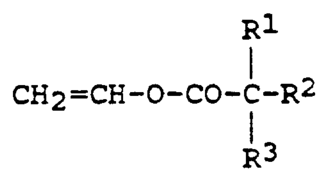

in which $R^1$, $R^2$ and $R^3$ are alkyl radicals and in which the entire acyl radical has 9 carbon atoms and comprises isomers containing two quaternary carbon atoms to which from 0.5 to 80 mol-% of isomers containing one quaternary carbon atom together with two tertiary carbon atoms in the acyl radical have been admixed.

**4.** A crosslinkable, fluorine-containing copolymer as claimed in one or more of claims 1 or 3, wherein component a) comprises copolymerized units of a vinyl ester of the formula

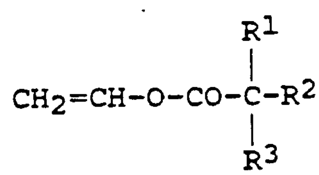

in which $R^1$, $R^2$ and $R^3$ are alkyl radicals and in which the entire acyl radical has 9 carbon atoms and comprises isomers containing two quaternary carbon atoms to which from 0.5 to 20 mol-% of isomers

containing one quaternary carbon atom together with one tertiary carbon atom in the acyl radical have been admixed.

**5.** A crosslinkable, fluorine-containing copolymer as claimed in one or more of claims 1 to 4, wherein the perfluoroolefin of component c) is tetrafluoroethylene.

**6.** A surface coating composition for industrial applications, containing conventional pigments and fillers, crosslinking components, solvents and assistants which are conventional for surface coatings, and containing from 10 to 50% by weight of a copolymer as claimed in claim 1.

**Claims for the following Contracting State : ES**

**1.** A process for the preparation of a crosslinkable, fluorine-containing copolymer by copolymerization of a vinyl ester of a branched carboxylic acid, a vinyl ester of a short-chain carboxylic acid and a perfluoroolefin as comonomers in the presence of usual initiators in liquid phase, which comprises selecting the kind and amount of the said comonomers in such a manner that a copolymer is formed which consists of

a) from 10 to 60 mol-% of copolymerized units of a vinyl ester of the formula

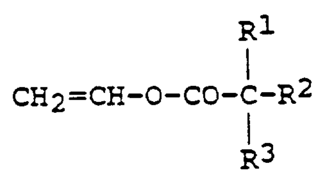

in which $R^1$, $R^2$ and $R^3$ are alkyl radicals and in which the entire acyl radical contains 9 carbon atoms and comprises isomers containing two quaternary carbon atoms to which from 0 to 80 mol-% of isomers containing one quaternary carbon atom together with at least one tertiary carbon atom in the acyl radical have been admixed,

b) from 20 to 50 mol-% of copolymerised units of a vinyl ester of the formula

$CH_2 = CH\text{-}O\text{-}CO\text{-}R^4$

in which $R^4$ is a straight-chain alkyl radical having 1 to 3 carbon atoms, and

c) copolymerized units of a perfluoroolefin of the formula

$CF_2 = CFR_f$

in which $R_f$ is F or a perfluoroalkyl radical having 1 to 8 carbon atoms, in an amount which makes the sum of components a) + b) + c) up to 100 mol-%, but with the proviso that at least 10 mol-% of the perfluoroolefin are present in the copolymer,

and submitting the so-formed copolymer to a saponifying aftertreatment in which 50 to 100 % of the copolymerized units of the vinyl ester b) are transformed into the OH-form.

**2.** A process for the preparation of crosslinkable, fluorine-containing copolymers according to claim 1, which comprises forming a copolymer which consists of

a) from 15 to 60 mol-% of copolymerized units of a vinyl ester of the formula

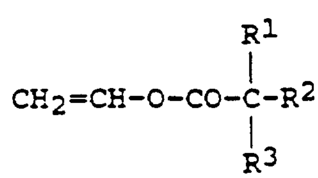

in which $R^1$, $R^2$ and $R^3$ are alkyl radicals and in which the entire acyl radical contains 9 carbon atoms and comprises isomers containing two quaternary carbon atoms to which from 0 to 80 mol-% of isomers containing one quaternary carbon atom together with at least one tertiary carbon atom in the acyl radical have been admixed,

b) from 15 to 45 mol-% of copolymerized units of a vinyl ester of the formula

$CH_2 = CH\text{-}O\text{-}CO\text{-}R^4$

in which $R^4$ is a straight-chain alkyl radical having 1 to 3 carbon atoms, and

c) copolymerized units of a perfluoroolefin of the formula

$CF_2 = CFR_f$

in which $R_f$ is F or a perfluoroalkyl radical having 1 to 8 carbon atoms, in an amount which makes the sum of components a) + b) + c) up to 100 mol-%, but with the proviso that at least 20 mol-% of the perfluoroolefin are present in the copolymer,

and submitting the so-formed copolymer to a saponifying aftertreatment in which 50 to 100 % of the copolymerized units of the vinyl ester b) are transformed into the OH-form.

**3.** A process for the preparation of a crosslinkable, fluorine-containing copolymer according to claims 1 and 2, wherein a copolymer is formed the component a) of which consists of copolymerized units of a vinyl ester of the formula

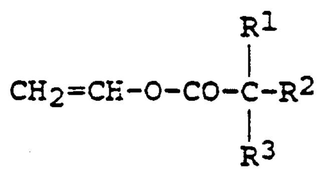

in which $R^1$, $R^2$ and $R^3$ are alkyl radicals and in which the entire acyl radical has 9 carbon atoms and comprises isomers containing two quaternary carbon atoms to which from 0.5 to 80 mol-% of isomers containing one quaternary carbon atom together with two tertiary carbon atoms in the acyl radical have been admixed.

**4.** A process for the preparation of a crosslinkable, fluorine-containing copolymer according to one or more of claims 1 or 3, wherein component a) comprises copolymerized units of a vinyl ester of the formula

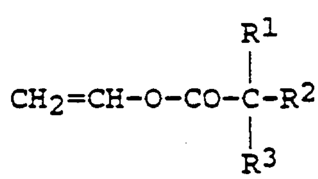

in which $R^1$, $R^2$ and $R^3$ are alkyl radicals and in which the entire acyl radical has 9 carbon atoms and comprises isomers containing two quaternary carbon atoms to which from 0.5 to 20 mol-% of isomers containing one quaternary carbon atom together with one tertiary carbon atom in the acyl radical have been admixed.

**5.** A process for the preparation of a crosslinkable, fluorine-containing copolymer according to one or more of claims 1 to 4, wherein a copolymer is formed the component c) of which is tetrafluoroethylene.

**6.** A process for the preparation of coatings by applying a mixture on the basis of a fluorinated copolymer, of crosslinking components, of solvents and assistants which are conventional for surface coatings, characterized in that the fluorinated copolymer is obtained according to one or more of claims 1 to 5

and is present in an amount of 10 to 50 % by weight.

**Revendications**

**Revendications pour les Etats contractants suivants : AT, BE, CH, DE, DK, FR, GB, IT, LI, LU, NL, SE**

**1.** Compolymère fluoré réticulable qui se compose

a) de 10 à 60 moles-% d'unités copolymérisées d'un ester vinylique de formule générale

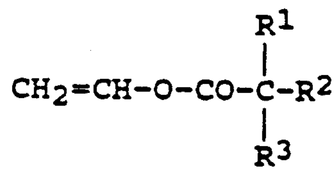
,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0 à 80 moles-% d'isomères qui présentent un atome de C quaternaire conjointement avec au moins un atome de C tertiaire dans le radical acyle,

b) de 20 à 50 moles-% d'unités copolymérisées d'un ester vinylique de formule générale

$CH_2 = CH\text{-}O\text{-}CO\text{-}R^4$ ,

dans laquelle $R^4$ est un radical alkyle linéaire avec 1 à 3 atomes de C et 50 à 100% des unités copolymérisées de cet ester vinylique b) étant présentes sous la forme OH obtenue par saponification, ainsi que

c) d'unités copolymérisées d'une perfluoroléfine de formule

$CF_2 = CFR_f$ ,

dans laquelle $R_f$ = F ou est un radical perfluoroalkyle avec 1 à 8 atomes de C, en une quantité qui complète la somme des composants a) + b) + c) à 100 moles-%, mais à la condition qu'au moins 10 moles-% de la perfluoroléfine soient présents dans le copolymère.

**2.** Copolymère fluoré réticulable selon la revendication 1, qui se compose

a) de 15 à 60 moles-% d'unités copolymérisées d'un ester vinylique de formule générale

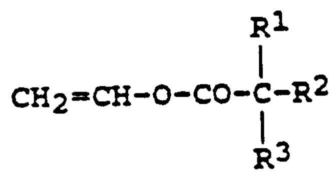
,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0 à 80 moles-% d'isomères qui présentent un atome de C quaternaire conjointement avec au moins un atome de C tertiaire dans le radical acyle,

b) de 15 à 45 moles-% d'unités copolymérisées d'un ester vinylique de formule générale

$CH_2 = CH\text{-}O\text{-}CO\text{-}R^4$ ,

où $R^4$ est un radical alkyle linéaire avec 1 à 3 atomes de C et 50 à 100% des unités copolymérisées de cet ester vinylique b) étant présentes sous la forme OH obtenue par saponification, ainsi que

c) d'unités copolymérisées d'une perfluoroléfine de formule

$CF_2 = CFR_f$ ,

dans laquelle $R_f$ = F ou est un radical perfluoroalkyle avec 1 à 8 atomes de C, en une quantité qui complète la somme des composants a) + b) + c) à 100 moles-%, mais à la condition qu'au moins 20 moles-% de la perfluoroléfine soient présents dans le copolymère.

**3.** Copolymère fluoré réticulable, selon la revendication 1 ou 2, caractérisé en ce que le composant a) est constitué d'unités copolymérisées d'un ester vinylique de formule générale

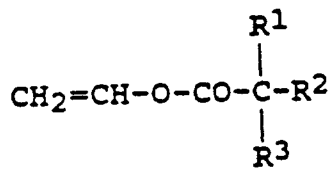 ,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0,5 à 80 moles-% d'isomères qui présentent un atome de C quaternaire conjointement avec deux atomes de C tertiaire dans le radical acyle.

**4.** Copolymère fluoré réticulable, selon une ou plusieurs des revendications 1 à 3, caractérisé en ce que le composant a) est constitué d'unités copolymérisées d'un ester vinylique de formule générale

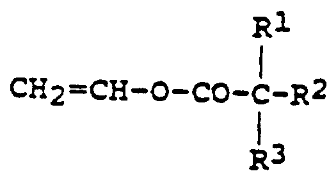 ,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0,5 à 20 moles-% d'isomères qui présentent un atome de C quaternaire avec un atome de C tertiaire dans le radical acyle.

**5.** Copolymère fluoré réticulable selon une ou plusieurs des revendications 1 à 4, caractérisé en ce que la perfluoroléfine du composant c) est le tétrafluoroéthylène.

**6.** Compositions de vernis pour des applications industrielles contenant des pigments et charges usuels, des composants de réticulation, des solvants et des adjuvants usuels pour des vernis, caractérisées en ce qu'elles contiennent de 10 à 50% en poids d'un copolymère selon la revendication 1.

**Revendications pour l'Etat contractant suivant : ES**

**1.** Procédé pour la préparation de copolymères fluorés réticulables par copolymérisation d'un ester vinylique d'un acide carboxylique ramifié, d'un ester vinylique d'un acide carboxylique à chaîne courte et d'une perfluoroléfine en tant que comonomère en présence d'amorceurs en phase liquide usuels, caractérisé en ce que lesdits comonomères sont choisis et proportionnés en quantité de telle façon, qu'il se forme un copolymère qui se compose

a) de 10 à 60 moles-% d'unités copolymérisées d'un ester vinylique de formule générale

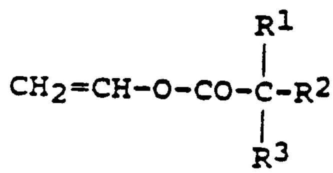 ,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0 à 80 moles-% d'isomères qui présentent un atome de C quaternaire avec au moins un atome de C tertiaire dans le radical acyle,

b) de 20 à 50 moles-% d'unités copolymérisées d'un ester vinylique de formule générale

$CH_2 = CH\text{-}O\text{-}CO\text{-}R^4$ ,

dans laquelle $R^4$ est un radical alkyle linéaire avec 1 à 3 atomes de carbone, ainsi que

c) d'unités copolymérisées d'une perfluoroléfine de formule

$CF_2 = CFR_f$ ,

dans laquelle $R_f$ = F ou est un radical perfluoroalkyle avec 1 à 8 atomes de C, en une quantité qui complète la somme des composants a) + b) + c) à 100 moles-%, mais à la condition qu'au moins 10 moles-% de la perfluoroléfine soient présents dans le copolymère, et le copolymère formé est soumis à un posttraitement saponifiant, où 50 à 100% des unités copolymérisées de l'ester vinylique b) sont transformées en la forme OH.

**2.** Procédé pour la préparation de copolymères fluorés réticulables selon la revendication 1, caractérisé en ce qu'il se forme un copolymère qui se compose

a) de 15 à 60 moles-% d'unités copolymérisées d'un ester vinylique de formule générale

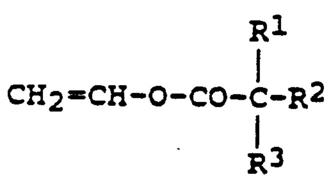 ,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0 à 80 moles-% d'isomères qui présentent un atome de C quaternaire avec au moins un atome de C tertiaire dans le radical acyle,

b) de 15 à 45 moles-% d'unités copolymérisées d'un ester vinylique de formule générale

$CH_2 = CH\text{-}O\text{-}CO\text{-}R^4$ ,

où $R^4$ est un radical alkyle linéaire avec 1 à 3 atomes de C, ainsi que

c) d'unités copolymérisées d'une perfluoroléfine de formule

$CF_2 = CFR_f$ ,

dans laquelle $R_f$ = F ou est un radical perfluoroalkyle avec 1 à 8 atomes de C, en une quantité qui complète la somme des composants a) + b) + c) à 100 moles-%, mais à la condition qu'au moins 20 moles-% de la perfluoroléfine soient présents dans le copolymère,

et le copolymère formé est soumis à un posttraitement saponifiant, où 50 à 100% des unités

copolymérisées de l'ester vinylique b) sont transformées en la forme OH.

3. Procédé pour la préparation de copolymères fluorés réticulables selon la revendication 1 ou 2, caractérisé en ce qu'il se forme un copolymère, dont le composant a) est constitué d'unités copolymérisées d'un ester vinylique de formule générale

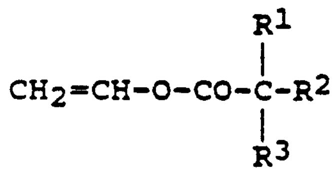,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0,5 à 80 moles-% d'isomères qui présentent un atome de C quaternaire conjointement avec deux atomes de C tertiaire dans le radical acyle.

4. Procédé pour la préparation de copolymères fluorés réticulables selon une ou plusieurs des revendications 1 à 3, caractérisé en ce que le composant a) est constitué d'unités copolymérisées d'un ester vinylique de formule générale

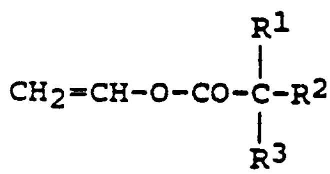,

dans laquelle $R^1$, $R^2$ et $R^3$ sont des radicaux alkyle et l'ensemble du radical acyle présentant 9 atomes de C et étant constitué d'isomères avec deux atomes de C quaternaire, auxquels on mélange de 0,5 à 20 moles-% d'isomères qui présentent un atome de C quaternaire avec un atome de C tertiaire dans le radical acyle.

5. Procédé pour la préparation de copolymères fluorés réticulables selon une ou plusieurs des revendications 1 à 4, caractérisé en ce qu'il se forme un copolymère dont le composant c) est le tétrafluoroéthylène.

6. Procédé pour la préparation de revêtements par dépôt d'un mélange à base d'un copolymère fluoré, de composants de réticulation, de solvants de vernis et d'autres adjuvants usuels pour des vernis, caractérisé en ce que le copolymère fluoré est un copolymère selon une ou plusieurs des revendications 1 à 5 et constitue une portion de 10 à 50% en poids.